# EUROPEAN PATENT SPECIFICATION

(11) **EP 1 769 341 B1**
(45) Date of publication and mention of the grant of the patent: **19.10.2016**
(21) Application number: 05762596.4
(22) Date of filing: 15.06.2005
(51) Int. Cl.: G06F 9/44

(54) **VIRTUAL USER INTERFACE FOR MULTIPLE USER DEVICES**
VIRTUELLE BENUTZEROBERFLÄCHE FÜR MEHRERE BENUTZEREINRICHTUNGEN
INTERFACE D'UTILISATEUR VIRTUELLE POUR UNE PLURALITE DE DISPOSITIFS D'UTILISATEUR

(30) Priority: 20.07.2004 US 894315
(43) Date of publication of application: 04.04.2007
(73) Proprietor: Hewlett Packard Enterprise Development LP, Houston, TX 77070 (US)
(72) Inventor: PRASAD, Balaji, Troy, MI 48098 (US); HANSES, Philip, C., East Lansing, MI 48823 (US)
(74) Representative: Samson & Partner Patentanwälte mbB
(86) International application number: PCT/US2005/021394
(87) International publication number: WO 2006/019485

(56) References cited:
- EP-A- 1 113 631
- EP-A- 1 357 723
- US-A1- 2003 231 212

## Description

### TECHNICAL FIELD

This description relates to creating and using user interfaces for computing and communication devices.

### BACKGROUND

Different types of computing and communication devices have varying input, output, storage and processing capabilities. For example, a personal digital assistant (PDA) generally has more limited input, display, storage and processing capacity than a more general-purpose computer, such as a laptop computer or a desktop computer. Similarly, a PDA may have greater input, display, storage and processing capacity for text than a mobile telephone that is capable of receiving and displaying short text messages. In contrast, a mobile telephone may be better suited to receive and transmit speech than a PDA, a laptop computer or a desktop computer.

European patent application EP 1,113,631 describes a multimedia messaging service in an integrated broadband communication system.

### SUMMARY

In one general aspect, a virtual user interface is defined for a virtual composite device having aggregate capabilities based on capabilities of a first user device and capabilities of a second user device. A user of the virtual user interface is enabled to define the aggregate capabilities of the virtual composite device. The user of the virtual user interface also is enabled to define preferences for using one of the first user device or the second user device to display a communication received by the virtual user interface.

Implementations may include one or more of the following features. For example, the aggregate capabilities of the virtual composite device may include capabilities of networks used by the first user device and the second user device. At least one of the capabilities of the first user device may differ from at least one of the capabilities of the second user device. Or, the capabilities of the first user device may be the same as the capabilities of the second user device. A determination is made as to which of the first user device or the second user device the communication is to be transmitted. The communication may be transmitted to the determined one of the first user device or the second user device. The first user device may be a computing device, a communication device or a display device, as may the second user device. For example, the first user device may be a computing device, and the second user device may be a communication device.

In another general aspect, a virtual user interface for a virtual composite device is used to present a communication. The virtual user interface includes aggregate capabilities based on multiple user devices associated with the virtual composite device. Each of the multiple user devices is associated with presentation capabilities and with a network by which the user device communicates. A communication associated with a user is received. Based on a type of the communication that is received and the virtual user interface associated with the user, a determination is made as to on which one of the multiple user devices the communication is to be presented. The communication is transmitted to the determined one of the multiple user devices over the network associated with the determined user device. The virtual user interface associated with the user includes preferences for using one of the multiple user devices to present the type of communication that was received.

Implementations may include one or more of the features noted above.

Implementations of the techniques discussed above may include a method or process, a system or apparatus, or computer software on a computer-accessible medium.

The details of one or more implementations are set forth in the accompanying drawings and the description below. Other features of particular implementations will be apparent from the description, the drawings, and the claims.

### DESCRIPTION OF DRAWINGS

FIG. 1 is a block diagram of a system with capabilities for creating and using a virtual user interface that leverages capabilities from multiple user devices associated with a user.
FIGS. 2A and 2B are block diagrams of a communications system illustrating aspects of the system of FIG. 1.
FIG. 3 is a block diagram illustrating an example data structure for a definition of a virtual user interface for a virtual composite device.
FIG. 4 is a flow chart of a process for creating a virtual user interface.
FIG. 5 is a flow chart of a process for using a virtual user interface.

### DETAILED DESCRIPTION

A user may have access to different types of computing, communication, and/or display devices (collectively, user devices) that are capable of exchanging communications, directly or indirectly, with other user devices. A device that is capable of presenting signals to any of the human senses, including visual sense, auditory sense, olfactory sense and tactile sense, may be referred to as a display device or a presentation device. The different types of user devices may have different, or substantially different, input, output, storage and/or processing capabilities. The user may desire to take advantage of particular capabilities of the user devices so that the different types of user devices work together based on the user's preferences. In one example, a user generally may have access to both a PDA and a mobile telephone that has a text messaging capability. The user may prefer, as a matter of convenience, to receive text messages on the user's mobile telephone, despite the more limited capacity of the user's mobile telephone to display text, as compared with the capacity of the user's PDA to display text. In such a case, the user may define a virtual user interface that leverages the capabilities of both the PDA and the mobile telephone. More particularly, a text communication sent to the user may be sent to the user's mobile telephone when the communication is able to be displayed on the mobile telephone, and the text communication may be sent to the user's PDA only when the mobile telephone is unable to receive or display the text communication (with, optionally, a message to the mobile telephone indicting that the larger message has been sent to the PDA). In some instances, a user may have access to two devices with the same capabilities, such as two mobile telephones. In such a case, the user may define a virtual user interface that leverages the capabilities of each of the mobile telephones.

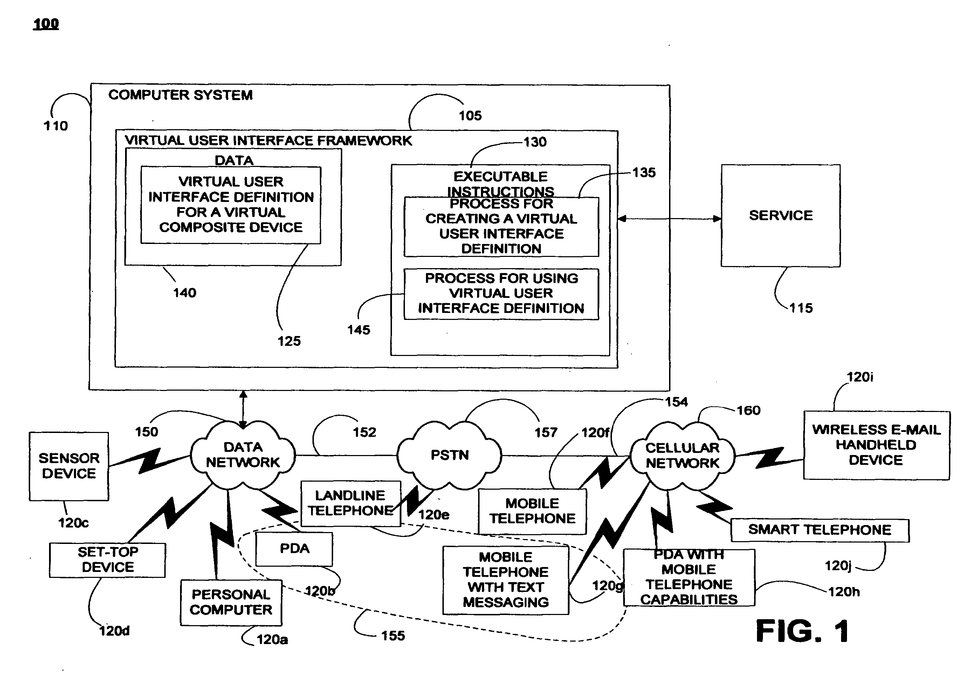

FIG. 1 illustrates a system 100 which is capable of directing communications between computing or communications devices and implementing techniques for creating and using a virtual user interface that leverages capabilities from multiple user devices associated with a user. The illustrated communications system 100 may include additional or alternative computing or communications devices that are not shown, or may include only a subset of the computing or communications devices that are shown.

In general, the system 100 includes a virtual user interface framework 105 that operates on a computer system 110 and receives, from a service 115, a communication that is directed to a user. The virtual user interface framework 105 provides the communication to one of multiple user devices 120a-120i that are associated with the user and capable of receiving the communication. The virtual user interface framework 105 makes a determination as to which of the user devices 120a-120i is to receive the communication. The determination is based on preferences of the user as reflected in a virtual user interface definition 125 of the virtual user interface framework 105.

More particularly, the virtual user interface framework 105 includes executable instructions 130 to create and use a virtual user interface for a virtual composite device. The virtual composite device is a logical device (as opposed to a physical device) that represents capabilities available through the multiple user devices that make up the virtual composite device. The executable instructions 130 include a process 135 to enable a user to create and store, in data storage 140 accessible to the virtual user interface framework 105, a virtual user interface definition 125 for a virtual composite device. The process 135 allows a user to specify, using the computer system 110, information related to the user devices included in a virtual composite device that is associated with the user. The specified information related to each user device may include, for example, a category or a type of user device group to which the user device belongs, capabilities of the user device (such as input, display, storage, and processing capacity) and information about the communication network or networks by which the user device is capable of communicating. The process 115 also allows a user to specify, for the virtual composite device, a virtual user interface that leverages capabilities of the virtual composite device for use in entering, displaying, transmitting, and/or processing communications sent to the user from the service 115 in a manner preferred by the user. In some implementations, the capabilities of the virtual composite device may be the non-redundant capabilities of each of the user devices included in the virtual composite device. The virtual user interface definition 125 for the virtual composite device is stored for later use.

The executable instructions 130 of the virtual user interface framework 105 also include a process 145 for using the virtual user interface definition 125 to direct information received from the service 115 to one of the user devices 120a-120i based on the virtual user interface definition 125.

In general, the service 115 may be any computer application, or component thereof, that generates or provides information or a communication. In some implementations, a service is an application component or computer program (including a subroutine, function, method or script) that performs one or more functions. In a more particular example, the service 115 may be a Web service that represents a self-contained collection of functionality that is accessible over the Web. The service 115 may be a proprietary service that is available on a private computing system, or through a public network. For example, the service 115 may be a stock quotes service that generates a list of stock prices and sends, at the end of the trading day, the list of stock prices to the user. As another example, the service 115 may be a movie rental service that, when a movie is returned late by a user, sends a communication to the user noting that the user owes a late fee.

Whatever the form of the service 115, the service generates an output directed to the user and communicated to the computer system 110. The communication sent by the service may be referred to as a service communication. In some implementations, the service 115 may automatically generate information for transmission on a predetermined schedule or based on the occurrence of a predetermined condition. The service 115 also may generate information as a result of a request from another entity or device, including (but not limited to) one of the user devices 120a-120i that is included in the virtual user interface. The service 115 may operate on the computer system 110 or may operate on a computer system (not shown) other than the computer system 110 that uses a communications pathway (not shown) to communicate with the computer system 110.

The user devices 120a-120i to which a communication may be sent are capable of operating on a data network 150, the Public Switched Telephone Network (PSTN) 157, or a cellular network 160 to exchange communications with the computer system 110. The data network 150 may be, for example, a wireless network, a cable network, a wide-area network (WAN), a local area network (LAN), the Internet, the world wide web (WWW), or a wired network. The PSTN 157 is a telephone system that is capable of connecting a variety of devices through a communications system that directs calls to a particular location, generally using land lines. The cellular network 160 may transmit digital or analog signals using cellular technologies, including Advanced Mobile Telephone System (AMPS), Narrowband Advanced Mobile Telephone Service (NAMPS), Frequency Shift Keying (FSK), Frequency Division Multiple Access (FDMA), Time Division Multiple Access (TDMA), and Code Division Multiple Access (CDMA), or any standard, such as Global System for Mobile Communications (GSM) or Cellular Digital Packet Data (CDPD).

More particularly, the user devices 120a-120d are capable of using the data network 150. The user devices 120a-120d include a personal computer 120a, a PDA 120b, a sensor device 120c, and a set-top device 120d. The personal computer 120a may be a general-purpose computer capable of operating as a communication application program (e.g., a desktop computer or a laptop computer running an application program, such as an electronic mail application). The personal computer 120a may also be a more special-purpose computer (e.g., a device specifically programmed to operate as a client of a particular application program). The PDA 120b is a device that may be used to store and/or manage personal organization data, such as data relating to a user's tasks, contacts and/or appointment calendar. The sensor device 120c may a device equipped with a sensor, such as a bar code scanner or a meter that detects a quantity of a product used (e.g., a meter to measure the amount of electricity consumed at a residence). The set-top device 120d may be a device that receives an output from the data network 150 and provides an output for display on a television set (on top of which the set-top device may be placed). The set-top device may run software to allow a user to interact with the programs shown on the television. The personal computer 120a, the PDA 120b, the sensor device 120c, and the set-top device 120d communicate with the computer system 110 over the data network 150.

The user devices 120a-120i also include a landline telephone 120e, which may be a corded or cordless telephone that uses a telephone line that travels over terrestrial circuits, such as, for example, wire, fiber optics, or microwave. The landline telephone 120e communicates over the PSTN 157 with the computer system 110.

The user devices 120a-120i also include a mobile telephone 120f, a mobile telephone 120g with text messaging capabilities, a PDA 120h with mobile telephone capabilities, a wireless e-mail handheld device 120i, and a smart telephone 120j. Each of the mobile telephone 120f, the mobile telephone 120g with text messaging capability, the PDA 120h with mobile telephone capability, the smart telephone 120j, and the wireless e-mail handheld device 120i uses the cellular network 160 to communicate with the computer system 110. In general, the mobile telephone 120f refers to a cellular or mobile telephone that transmits wireless telecommunications signals capable of being received and transmitted by the cellular network 160.

The mobile telephone 120g with text messaging capabilities is a mobile telephone that is capable of wirelessly transmitting and receiving text in addition to speech. For example, the mobile telephone 120g with text messaging capabilities may send and receive electronic mail messages using a short message service (SMS). SMS is a protocol by which text messages of a limited size may be sent to and from a properly equipped mobile telephone, such as mobile telephone 120g. The maximum size of the text message may vary based on the type of cellular network on which the SMS service operates. In one case, a text message sent using SMS is limited to around 160 characters.

The PDA 120h with mobile telephone capabilities may be a PDA that is additionally capable of operating as a mobile telephone on a mobile network to send and receive telephone calls.

A wireless electronic mail (e-mail) handheld device 120i may be a device that is able to wirelessly transmit and receive e-mail messages. Generally, the e-mail is first sent to an e-mail system connected to a data network and subsequently forwarded over the cellular network 160 to the wireless e-mail handheld device 120i.

A smart telephone 120j refers to a mobile telephone that is capable of receiving and transmitting packet-based information. In some implementations, the smart telephone 120j may be capable of communicating with a web server or other computer over the Internet and, as such, may be referred to as an Internet-enabled mobile telephone or an Internet-ready mobile telephone.

In one example of using the communication system 100, a user interacts with the process 135 of the virtual user interface framework 105 to define a virtual user interface for a virtual composite device 155 that includes the capabilities of both the PDA 120b and the mobile telephone 120g with text messaging. More particularly, the user creates a virtual user interface definition to handle a list of stock prices received from the service 115. The communication is sent to one of the PDA 120b or the mobile telephone 120g based on the form in which the list is provided in the communication from the service 115. The list may be provided in the form of a daily update in which stock price information is routinely sent to the user at the close of the trading day. Alternatively, the list may be provided in the form of an alert when a particular stock has met or exceeded a predetermined threshold condition. The user configures the virtual user interface to send the daily update information from the service 115 to the PDA 120b using the data network 150 and to send the alert as a text message to the mobile telephone 120g using the cellular network 160.

Similarly, a user may use the process 135 to further configure the virtual user interface for a virtual composite device that includes the personal computer 120a, the PDA 120b, and the mobile telephone 120g. In this case, the virtual user interface is configured to send, when the user is traveling and not able to access the user's routine e-mail account, the daily update information to a globally accessible e-mail system (not shown) by which the user may receive the information over the data network 150 using the personal computer 120a.

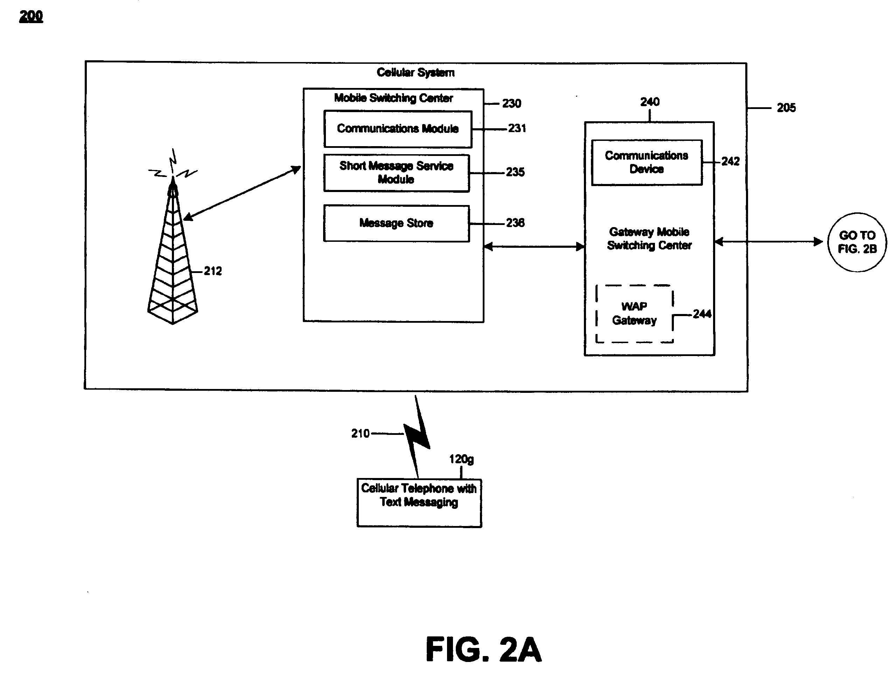

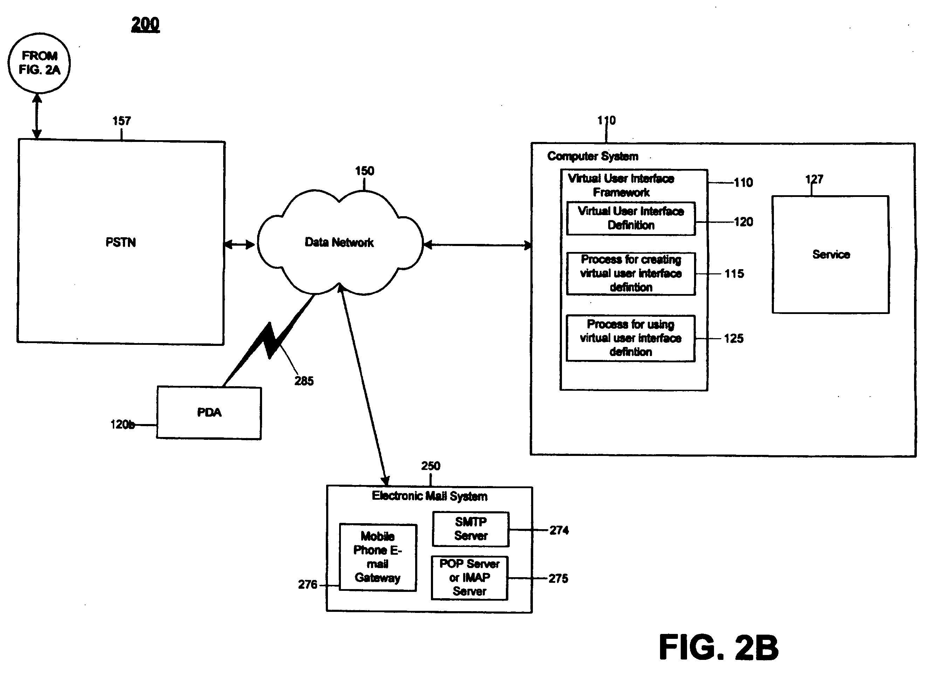

FIGS. 2A and 2B illustrate a communications system 200 having a structure generally included in the communications system 100 of FIG. 1. However, similar methodologies may be applied to other implementations where different components are used to define the structure of the system, or whether the functionality is distributed differently among the components shown by FIG. 1.

More particularly, the communications system 200 includes a mobile telephone 120g with text messaging capability and a cellular system 205. The cellular system 205 is capable of communicating, over a wireless communication pathway 210, with the mobile telephone 120g. The mobile telephone 120g communicates with the mobile system 205 in order to make and receive telephone calls and text messages.

The cellular system 205 includes a base station 212. When the mobile telephone 120g is turned on, the mobile telephone 120g finds and establishes a communications link with the base station 212. When a user speaks into the mobile telephone 120g, the speech is converted into an analog or digital audio signal which is transmitted to the base station 212. The base station 212 transfers the audio signal to a mobile switching station 230. (Although only one base station 212 and one mobile switching center 230 are shown, the cellular system 205 typically includes more than one base station 212 and more than one mobile switching center 230.)

The mobile switching center 230 uses a communications module 231 that determines how the audio signal is to be routed and sends the audio signal to the appropriate destination. The mobile switching center 230 also includes a short message service module 235 that is similar in function to the communications module 231. In contrast to the communications module 231 that determines how audio signals carrying speech are routed, the short message service module 235 determines how signals carrying text messages are routed. When the short message service module 235 is unable to route a text message to the destination mobile telephone (e.g., when the mobile telephone is turned off), the short message service module 235 stores the text message in a message store 236 for later delivery to the destination mobile phone.

The mobile system 205 also includes a gateway mobile switching center 240. In general, the gateway mobile switching center 240 receives a call in the form of audio signals carrying speech or text messages from a mobile telephone routed from a mobile switching center 230 and routes the call to the appropriate destination. The gateway mobile switching center 230 may route the call to another mobile switching center or to a PSTN based on the destination of the call. For example, if the call's destination is a landline phone, the call may be routed through a PSTN associated with the destination landline phone. Additionally, if the destination is another mobile telephone outside the mobile system 205, the call may be routed to a mobile system associated with the destination mobile phone.

The gateway mobile switching center 240 also may include a wireless application protocol (WAP) gateway 244. WAP is a standard with which wireless devices can access a data network, such as the data network 150. As such, the WAP gateway 244 provides a route by which the mobile telephone 120g is able to access the data network 150. For example, a signal from the mobile telephone may be routed through the base station 212, the mobile switching center 230, and the WAP gateway 244 of the gateway mobile switching center 240 before being communicated over the PSTN 157 to reach the data network 150.

As such, the mobile telephone is capable of communicating with an electronic mail system 250, over the PSTN 157 and the data network 150, to receive and send electronic mail. The electronic mail system 250 includes a secure mail transfer protocol (SMTP) server 274 that is used to send messages created by the users. Messages sent to the users are stored on a server 275 that implements the post office protocol (POP) or the Internet message access protocol (IMAP). After a user logs in to and accesses the electronic mail system 250, the user may request to view messages stored on the POP or IMAP server 275.

The electronic mail system 250 also includes a mobile telephone e-mail gateway 276 with which a user of the mobile telephone 120g accesses the electronic mail system 250. For the user to access the electronic mail system 250, a connection between the mobile telephone 120g and electronic mail system 250 is established. To do so, the mobile telephone 120g accesses the WAP gateway 244 of the gateway mobile switching center 240, which provides a connection, through the PSTN 157, to the data network 150 and, in turn, to the electronic mail system 250. After logging in, the user of the mobile telephone may access the SMTP server 274 and the POP or IMAP server 275 to send and receive electronic mail messages through the mobile telephone e-mail gateway 276.

Additionally, the system 200 includes a PDA 120b capable of accessing the electronic mail system 250 through the data network 150. The user of the PDA 120b may access the SMTP server 274 and the POP or IMAP server 275 to send and receive electronic mail using the electronic mail system 250 and the data network 150.

In one implementation, a user may have access, at the same time, to the mobile telephone 120g and the PDA 120b. The user may use the computer system 110 to define and use a virtual user interface for a virtual composite device that includes the capabilities of both the mobile telephone 120g and the PDA 120b, as described earlier with respect to FIG. 1.

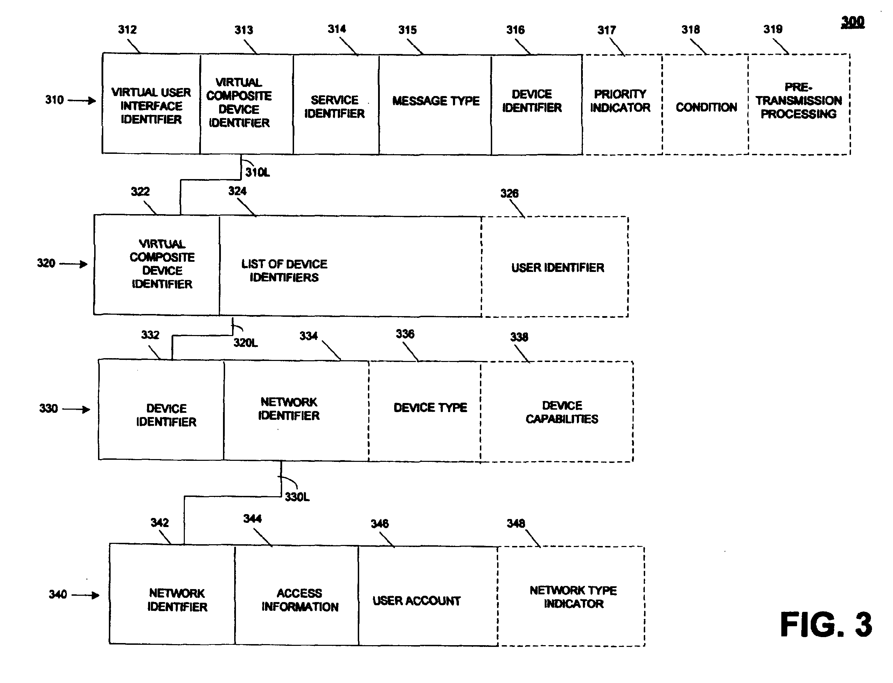

Before discussing the additional detail regarding the method by which a virtual user interface for a virtual composite device is created and used, an example format that may be used for a virtual user interface as first described. FIG. 3 shows an example data structure 300 in simplified form. The data structure 300 includes virtual user interface information 310 that identifies the virtual composite device and service communication to which the virtual user interface applies, and the manner of selecting which one of the devices included in the virtual composite device is to be sent the service communication. With reference also to FIG. 1, the data structure 300 is one exemplary manner of storing the virtual user interface 140 for a virtual composite device.

More particularly, the virtual user interface information 310 includes a virtual user interface identifier 312 to uniquely identify a particular virtual user interface and a virtual composite device identifier 313 to uniquely identify a particular virtual composite device to which the virtual user interface identified by the virtual user interface identifier 312 applies. The virtual user interface information 310 also includes a service identifier 314 that uniquely identifies the service from which the communication is received and a message type 315 that describes one of several possible message types associated with the service identified by the service identifier 314. Collectively, the service identifier 314 and the message type 315 may define a type of service communication that may be handled by the virtual user interface for the virtual composite device identified by the virtual composite device identifier 313.

The virtual user interface information 310 also includes a device identifier 316 that uniquely identifies a user device included in the virtual composite device to which the service communication is to be transmitted. Additionally, one or more of a priority indicator 317 and a condition 318 may identify the circumstances in which the service communication is transmitted to the device corresponding to the device identifier 316.

The priority indicator 317 may be used to reflect a hierarchy of preference by a user to receive the service communication on devices included in the virtual composite device identified by the virtual composite device identifier 313. For example, a user may prefer to receive a service communication in the form of a text message sent to a mobile telephone when the mobile telephone is activated and, when the mobile telephone is not activated, to receive the service communication on the user's PDA.

Similarly, the condition 318 may be used to define a condition under which the device corresponding to the device identifier 316 is to receive the service communication. One example of a condition is when the user is out of the office. In such a case, a communication message that otherwise may be provided to the user's desktop computer (such as by sending an e-mail message to a e-mail server accessible to the desktop computer) may be sent to a different e-mail account that is accessible when the user is out of the office.

The virtual user interface information 310 also may include pre-transmission processing 319 information that describes processing that needs to be performed before the service communication is sent to the device corresponding to the device identifier 316. In one example of pre-transmission processing 319, a service communication that was received by the virtual user interface in the form of text and is to be transmitted to a mobile telephone in the form of a voice message may need to be converted from text to speech before the service communication is transmitted to the device. Similarly, a service communication that was received by the virtual user interface as speech may need to be converted to text before the service communication is transmitted to a device that is only capable of displaying and processing text.

In some implementations, as illustrated by the virtual user interface information 310, different combinations of data may be used to determine to which of several devices of the virtual composite device the service communication is to be transmitted. In the case where all service communications from a service are sent to the same device in the virtual composite device, the service identifier 314 and the device identifier 316 may identify the device to which the service communication is to be transmitted. By contrast, when a service generates different types of service communications, each of which is identified by a message type, the service identifier 314, the message type 315 and the device identifier 316 may be used to identify the device to which the service communication is transmitted. In addition, in the case where the service generates different types of service communications that are transmitted to different devices based on a condition, the service identifier 314, the message type 315, the device identifier 316 and the condition 318 may be used to identify the device to which the service communication is transmitted. Similarly, when one of several types of messages of a service is transmitted to a device based on the availability of the device to receive a service communication, the service identifier 314, the message type 315, the device identifier 316 and the priority indicator 317 may be used to identify the device to which the service communication is transmitted.

The data structure 300 also includes virtual composite device information 320. The virtual composite device information 320 includes a virtual composite device identifier 322 that uniquely identifies a particular virtual composite device to which a virtual user interface applies. The virtual user interface information 310 may be related to the virtual composite device information 320 based on corresponding values in the virtual composite device identifier 313 of the virtual user interface information 310 and the virtual composite device identifier 322 of the virtual composite device information 320, as shown by link 310L.

The virtual composite device information 320 also includes a list 324 of device identifiers that identifies user devices that are a part of the virtual composite device that corresponds to the virtual composite device identifier 322. The virtual composite device information 320 also may include a user identifier 326 that uniquely identifies a user that is associated with the virtual composite device.

The data structure 300 also includes device information 330 for the user devices that are a part of the virtual composite device to which the virtual user interface applies. The device identifier 332 identifies the user device that corresponds to the device 330 information. In some implementations, the device identifier 332 may be a serial number assigned by the manufacturer to a particular device, though the device identifier 332 need not necessarily relate to a particular, unique device. For example, a user may prefer to identify a device as a mobile telephone with particular device capabilities and that is accessible through a particular access provided (identified as the network identifier 334), without providing the serial number that identifies the device. In such a case, when the user replaces the mobile telephone with a similar device, the user need not revise the virtual user interface definition to reflect the serial number of the new mobile telephone.

The device information 330 may be related to the virtual composite device information 320 based on a corresponding value in the list 324 of device identifiers of the virtual composite device information 320 and in the device identifier 332 of the virtual composite device information 330, as shown by link 320L. The device information 330 also may be related to the virtual user interface information 310 based on corresponding values in the device identifier 316 of the virtual user interface information 310 and the device identifier 332 of the device information 330.

The device information 330 also includes a network identifier 334 that uniquely identifies the network to which the device that corresponds to the device identifier 332 may connect. The device information 330 also may include a device type 336 that describes a category of devices to which the device that corresponds to the device identifier 332 belongs. Examples of device type include a mobile telephone, a PDA, a desktop computer, and a mobile telephone with text messaging capabilities. The device type 336 may include the manufacturer or brand and/or model information.

The device information 330 also may include a description of device capabilities 338. In some implementations, the device capabilities 338 description may be highly technical and/or structured in nature such that the device capabilities 338 may be programmatically accessed and understood by the virtual user interface framework. Additionally or alternatively, the device capabilities 338 may be described in terms that a user may more easily understand to aid the user in configuring the virtual user interface for the virtual composite device. For example, capabilities of a PDA to store calendar information may be included in device information associated with the PDA. Additionally, user interface, display, storage, and processing capabilities associated with the device may be included in the device capabilities 338. In one example, device capabilities 338 for a mobile telephone with text messaging capabilities may include the maximum amount of text that can be received, processed and displayed. In another example, device capabilities 338 for a mobile telephone with text messaging capabilities may include the limitation that only a numeric keypad may be used for text entry.

The data structure 300 also includes network information 340 for networks to which the devices included in the virtual composite device may be connected. The network information 340 includes a network identifier 342 that uniquely identifies the network corresponding to the network identified by the network identifier 342. The network information 340 may be related to the device information 330 based on corresponding values in the network identifier 334 of the device information 330 and in the network identifier 342 of the network information 340, as shown by link 330L.

The network information 340 also includes access information 344 that describes how the network may be accessed. For example, the access information 344 may identify one or more telephone numbers and/or network addresses by which the network may be accessed. The access information 344 also may include a protocol for use in accessing the network. The network information 340 also may include a user account 346 that identifies more particularly how a device may be accessed using the network. For example, a user account 346 may include a telephone number of a particular mobile telephone that corresponds to a device. In another example, the user account 346 may include an e-mail address for the user to which a service communication may be sent. In such a case, the user account 346 may be accessible to more than one of the user devices that is a part of the virtual composite device. For example, an e-mail account for a user may be accessible by a desktop computer, a PDA and a laptop computer, each of which are associated with a user to whom the virtual user interface applies. The network information 340 also may include a network type indicator that indicates a category of networks to which the network identified by the network identifier 342 belongs. For example, a network type indicator may indicate whether the network is a data network, the PSTN, or a cellular network.

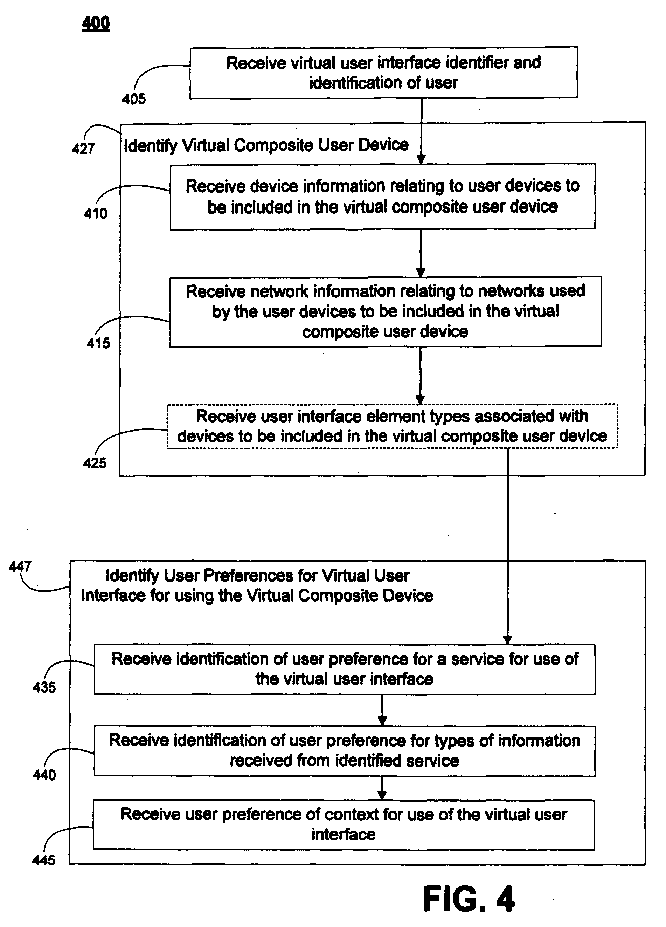

FIG. 4 illustrates a process 400 for creating a virtual user interface associated with a virtual composite user device. The process 400 is performed by a processor in the computer system operating the virtual user interface framework, such as a processor of the computer system 110 of FIG. 1, when initiated by a user. The user who initiates the process 400 may be, for example, an end user for whom the virtual user interface applies or a system administrator creating a virtual user interface for use by another user. In general, during the process 400, a user provides inputs to direct the virtual user interface framework operating on the computer system in creating a virtual user interface for a virtual composite device.

The process 400 begins when the virtual user interface framework receives a virtual user interface identifier and identification of a user to whom the virtual user interface applies (step 405). The virtual user interface identifier may be generated by the processor or may be entered by the user. The identification of a user associated with the virtual user interface may be a user name, a user identifier number, or an electronic address associated with the user. The identification of the user may be used as the user identifier, such as the user identifier 326 of FIG. 3.

The processor receives device information relating to each of the user devices associated with the user that are to be included in the virtual composite device (step 410). Device information may include, for example, a device identifier, a device type and device capabilities described previously with respect to FIG. 3. This may be accomplished, for example, by the selection of a device from a list of devices by means of user control of a pointing device. In some implementations, a user may select a type device from a list of broad categories of devices (such as PDAs, computers, or mobile telephones). In response, the processor may present additional information that relates to the user's previous selection and from which the user may select. In one example in which a user selects a PDA from a broad category of devices, the processor may display a list of manufacturers of PDAs from which the user selects. Then the processor may query a website of the manufacturer to identify models of PDAs and present a list of models, from which the user may select. Once a particular model has been identified, the processor may use the manufacturer's information to identify particular capabilities of the PDA.

The processor receives network information for each network that may be used to access one of the devices (step 415). The network information received may include, for each network that may be used to access a device in the virtual composite device, information that is the same as, or similar to, the network information 340 described previously with respect to FIG. 3. The network information received also may include an association of the devices that may access each of the networks for which network information is received. In addition to being entered by a user, the network information may be received indirectly.

Using FIG. 1 as an example, information relating to the data network 150 used by the PDA 120b may be included in the network information. In one example, the network information for the data network 150 may be determined using the received device information for the PDA 120b. As another example, information relating to how the mobile telephone 120g uses the WAP gateway 244 to access the electronic mail system 250 over the PSTN 157 and the data network 150 may be received. Additionally, information relating to the mobile system 205 may be included in the network information.

Optionally, information about user interface element types associated with a device may be received (step 425). The received information about the user interface element types may relate to particular features of user interfaces presented on the user devices. The user interface elements information may relate a user interface element from one type of interface to a corresponding interface element in another type of interface. For example, in a voice-enabled interface, a spoken command "OK" may correspond to a key press in a graphical user interface. In one implementation, User Interface Markup Language (UIML) may be used to describe user interface elements. In general, UIML refers to an open standard user interface description language that can describe user interfaces for, for example, traditional desktop, web, mobile, embedded, and voice applications. The steps 410, 415 and 425 collectively may be referred to as a sub-process 427 for identifying a virtual composite user device.

The processor receives an indication of a service from which a communication for the user is to be processed by the virtual user interface for the virtual composite device (step 435). For example, a user may select to use the stock quotes service described above.

The processor also may receive an indication of a device to which the received communication is to be sent (step 440). For example, a user may elect to receive a communication in the form of text information at the mobile telephone 120g, as described earlier.

Additionally, user preference of a context for use of the virtual user interface may be received (step 445). For example, in the context of traveling, a user may prefer to receive daily updates from the stock service through a globally accessible e-mail system.

The steps 435, 440 and 445 collectively may be referred to as a sub-process 447 for identifying user preferences for a virtual user interface for using the virtual composite device.

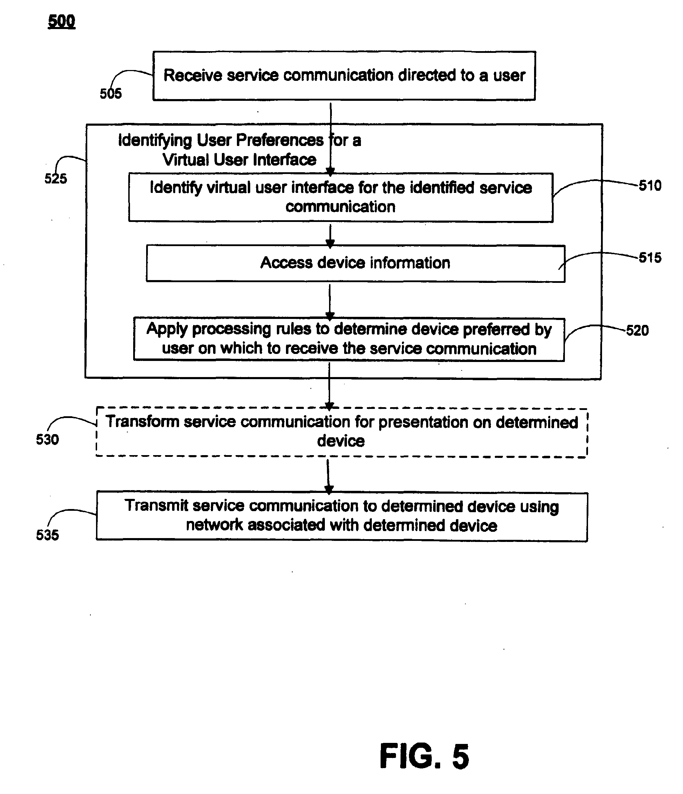

FIG. 5 is a flow chart of a process 500 for using a virtual user interface to direct information to physical user devices of a virtual composite device as preferred by a user. The process 500 may be performed by a processor in the computer system operating the virtual user interface framework, such as a processor of the computer system 110 of FIG. 1, when a service communication for the user associated with the virtual user interface is received.

The process 500 begins with receipt of a service communication directed to a user (step 505). The service communication may be information or a communication received from a service, such as, for example, the service 115 of FIG. 1, and is directed to a particular user. The user may be identified, by example, by a user name, user identifier, account identifier, network address or telephone number.

The processor identifies a virtual user interface that is applicable to the type of service communication that was received (step 510). This may be accomplished, for example, by identifying a virtual user device for the user to whom the service communication was directed and then identifying the virtual user interface for the virtual composite device. The virtual user interface then is used to identify a type of service communication for which a processing rule exists. More particularly, using the example of FIG. 3, the processor may identify an entry of virtual composite device information 320 based on the user identifier 326 that matches the user identifier to whom the service communication is directed. The virtual composite device identifier 322 of the entry in the virtual composite device information is used to identify a corresponding entry in the virtual user interface information 310.

The processor accesses device information relating to devices included in the virtual composite device for the user (step 515). The device information may be, for example, device information 330 that is identified based on the list 324 of device identifiers in the entry of the virtual composite device information associated with the user. The device information accessed may include network information that is associated with the accessed device information. For example, an entry in the network information 340 may be accessed based on the network identifier 334 associated with each entry of device information 330 that corresponds to the list 324 of device identifiers included in the virtual composite device information.

The processor applies processing rules for determining to which of the user devices in the virtual composite device the service communication is to be directed (step 520). This may be accomplished, for example, by accessing an entry in the virtual user interface information 310 based on the service communication received (e.g., based on a service identifier 314 and a message type 315 that corresponds to the service communication received). The device is determined based on, for example, some or all of the device identifier 316, priority indicator 317, and condition 318, as described with respect to FIG. 3.

The steps 510, 515, and 520 collectively may be referred to as a sub-process 525 for identifying user preferences for a virtual user interface for using the virtual composite device.

The processor may transform the service communication so that it may be presented on the determined device (step 530). For example, pre-transmission processing may be applied to the service communication based on the pre-transmission processing 319 information associated with the user preferences of the virtual user interface as reflected in the virtual user interface information 310 for the type of service communication that was received, as described previously with respect to FIG. 3.

The processor transmits the service communication (or transformed service communication when step 530 has been performed) to the determined device using one or more networks associated with the determined device (step 535). This may be accomplished, for example, by using network information 340 that is associated with the network identified in device information 330 for the device to which the service communication is to be sent (as identified by the device identifier 316 of the virtual user interface entry for the type of service communication that was received). The process 500 then ends.

The techniques described above can be implemented in digital electronic circuitry, or in computer hardware, firmware, software, or in combinations of them. The techniques can be implemented as a computer program product (i.e., a computer program tangibly embodied in an information carrier, such as a machine-readable storage device, or in a propagated signal, for execution by, or to control the operation of, data processing apparatus, such as a programmable processor, a computer, or multiple computers). A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Aspects of the techniques can be performed by one or more programmable processors executing a computer program to perform functions of the techniques by operating on input data and generating output. Steps can also be performed by, and apparatus can be implemented as, special purpose logic circuitry, such as a an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, such as magnetic disks, magneto-optical disks, or optical disks. Information carriers suitable for embodying computer program instructions and data include all forms of non-volatile memory, including by way of example semiconductor memory devices such as EPROM, EEPROM, and flash memory devices; magnetic disks such as internal hard disks or removable disks; magneto-optical disks; and CD-ROM and DVD-ROM disks. The processor and the memory can be supplemented by, or incorporated in, special purpose logic circuitry.

A number of implementations have been described. Nevertheless, it will be understood that various modifications may be made. For example, various operations in the disclosed processes may be performed in different orders or in parallel, and various features and components in the disclosed implementations may be combined, deleted, rearranged, or supplemented. Accordingly, other implementations are within the scope of the following claims.

## Claims

1. A computer-readable medium having embodied thereon instructions comprised by a virtual user interface framework for using a virtual user interface for a virtual composite device to present a communication wherein the virtual composite device represents capabilities available through multiple user devices associated with the virtual composite device, each of the multiple user devices is associated with presentation capabilities and with a network by which the user device communicates, the virtual user interface associated with a user includes preferences for using one of the multiple user devices to present the type of communication that was received, and the instructions, when executed, cause a processor to:
receive a communication associated with a user by the virtual user interface framework,
based on a message type of the communication that is received and the preferences included in the virtual user interface directed to the user, determining one of the multiple user devices that is capable of receiving the communication on which to present the communication, and
transmitting the communication from the virtual user interface framework to the determined one of the multiple user devices over the network associated with the one of the multiple user devices

2. The medium of claim 1 wherein at least one presentation capability of at least one of the multiple user devices in the virtual user interface is different from at least one presentation capability of another one of the multiple user devices in the virtual user interface.

3. The method of claim 1 wherein presentation capabilities of at least one of the multiple user devices in the virtual user interface are the same as presentation capabilities of another one of the multiple user devices in the virtual user interface.

4. The medium of claim 1 wherein the capabilities of the virtual composite device include capabilities of networks used by the first user device and the second user device.

5. The medium of claim 1 wherein the first user device comprises a computing device.

6. The medium of claim 1 wherein the first user device comprises a communication device.

7. The medium of claim 1 wherein the first user device comprises a computing device and the second user device comprises a communication device.

8. The medium of claim 1 wherein the first user device comprises a display device.

9. A computer-implemented method of a virtual user interface framework for using a virtual user interface for a virtual composite device to present a communication wherein the virtual composite device represents capabilities available through multiple user devices associated with the virtual composite device wherein each of the multiple user devices is associated with presentation capabilities and with a network by which the user device communicates, the virtual user interface associated with the user includes preferences for using one of the multiple user devices to present the type of communication that was received, the method comprising:
receiving a communication directed to a user by the virtual user interface framework,
based on a message type of the communication that is received and the preferences included in the virtual user interface associated with the user,
determining one of the multiple user devices that is capable of receiving the communication on which to present the communication, and
transmitting the communication from the virtual user interface framework to the determined one of the multiple user devices over the network associated with the one of the multiple user devices.

10. The method of claim 9 wherein at least one presentation capability of at least one of the multiple user devices in the virtual user interface is different from at least one presentation capability of another one of the multiple user devices in the virtual user interface.

11. The method of claim 9 wherein presentation capabilities of at least one of the multiple user devices in the virtual user interface are the same as presentation capabilities of another one of the multiple user devices in the virtual user interface.

12. The method of claim 9 wherein the capabilities of the virtual composite device include capabilities of networks used by the first user device and the second user device.

13. The method of claim 9 wherein the first user device comprises a computing device.

14. The method of claim 9 wherein the first user device comprises a communication device.

15. The method of claim 9 wherein the first user device comprises a computing device and the second user device comprises a communication device.

16. The method of claim 9 wherein the first user device comprises a display device.

## Patentansprüche

1. Computerlesbares Medium mit darauf verkörperten Anweisungen, umfasst durch einen Rahmen einer virtuellen Benutzerschnittstelle für den Gebrauch einer virtuellen Benutzerschnittstelle für eine virtuelle Verbundvorrichtung, um eine Kommunikation zu präsentieren, wobei die virtuelle Verbundvorrichtung durch mehrere mit der virtuellen Verbundvorrichtung verknüpfte Benutzervorrichtungen verfügbare Fähigkeiten darstellt, wobei jede der mehreren Benutzervorrichtungen verknüpft ist mit Präsentationsfähigkeiten und mit einem Netzwerk, über das die Benutzervorrichtung kommuniziert, wobei die mit einem Benutzer verknüpfte virtuelle Benutzerschnittstelle Voreinstellungen für den Gebrauch einer der mehreren Benutzervorrichtungen enthält, um den Typ der empfangenen Kommunikation zu präsentieren, und wobei die Anweisungen, wenn ausgeführt, bewirken, dass ein Prozessor Folgendes ausführt:
Empfangen einer mit einem Benutzer verknüpften Kommunikation durch den Rahmen der virtuellen Benutzerschnittstelle,
auf der Grundlage des Nachrichtentyps der empfangenen Kommunikation sowie der Voreinstellungen, die in der an den Benutzer gerichteten virtuellen Benutzerschnittstelle enthalten sind, Bestimmen einer der mehreren Benutzervorrichtungen, die in der Lage ist, die Kommunikation zu empfangen, auf der die Kommunikation zu präsentieren ist, und
Übermitteln der Kommunikation von dem Rahmen der virtuellen Benutzerschnittstelle an die bestimmte der mehreren Benutzervorrichtungen über das mit der einen der mehreren Benutzervorrichtungen verknüpfte Netzwerk.

2. Medium nach Anspruch 1, wobei sich wenigstens eine Präsentationsfähigkeit wenigstens einer der mehreren Benutzervorrichtungen in der virtuellen Benutzerschnittstelle von wenigstens einer Präsentationsfähigkeit einer anderen der mehreren Benutzervorrichtungen in der virtuellen Benutzerschnittstelle unterscheidet.

3. Verfahren nach Anspruch 1, wobei Präsentationsfähigkeiten wenigstens einer der mehreren Benutzervorrichtungen in der virtuellen Benutzerschnittstelle identisch sind mit Präsentationsfähigkeiten einer anderen der mehreren Benutzervorrichtungen in der virtuellen Benutzerschnittstelle.

4. Medium nach Anspruch 1, wobei die Fähigkeiten der virtuellen Verbundvorrichtung Fähigkeiten von durch die erste Benutzervorrichtung und die zweite Benutzervorrichtung eingesetzten Netzwerken enthalten.

5. Medium nach Anspruch 1, wobei die erste Benutzervorrichtung eine Rechnervorrichtung umfasst.

6. Medium nach Anspruch 1, wobei die erste Benutzervorrichtung eine Kommunikationsvorrichtung umfasst.

7. Medium nach Anspruch 1, wobei die erste Benutzervorrichtung eine Rechnervorrichtung umfasst und die zweite Benutzervorrichtung eine Kommunikationsvorrichtung umfasst.

8. Medium nach Anspruch 1, wobei die erste Benutzervorrichtung eine Anzeigevorrichtung umfasst.

9. Computerimplementiertes Verfahren eines Rahmens einer virtuellen Benutzerschnittstelle für den Gebrauch einer virtuellen Benutzerschnittstelle für eine virtuelle Verbundvorrichtung, um eine Kommunikation zu präsentieren, wobei die virtuelle Verbundvorrichtung durch mehrere mit der virtuellen Verbundvorrichtung verknüpfte Benutzervorrichtungen verfügbare Fähigkeiten darstellt, wobei jede der mehreren Benutzervorrichtungen verknüpft ist mit Präsentationsfähigkeiten und mit einem Netzwerk, über das die Benutzervorrichtung kommuniziert, wobei die mit dem Benutzer verknüpfte virtuelle Benutzerschnittstelle Voreinstellungen für den Gebrauch einer der mehreren Benutzervorrichtungen enthält, um den Typ der empfangenen Kommunikation zu präsentieren, wobei das Verfahren Folgendes umfasst:
Empfangen einer an einen Benutzer gerichteten Kommunikation durch den Rahmen der virtuellen Benutzerschnittstelle,
auf der Grundlage eines Nachrichtentyps der empfangenen Kommunikation und der Voreinstellungen, die in der mit dem Benutzer verknüpften virtuellen Benutzerschnittstelle enthalten sind,
Bestimmen einer der mehreren Benutzervorrichtungen, die in der Lage ist, die Kommunikation zu empfangen, auf der die Kommunikation zu präsentieren ist, und
Übermitteln der Kommunikation von dem Rahmen der virtuellen Benutzerschnittstelle an die bestimmte der mehreren Benutzervorrichtungen über das mit der einen der mehreren Benutzervorrichtungen verknüpfte Netzwerk.

10. Verfahren nach Anspruch 9, wobei sich wenigstens eine Präsentationsfähigkeit wenigstens einer der mehreren Benutzervorrichtungen in der virtuellen Benutzerschnittstelle von wenigstens einer Präsentationsfähigkeit einer anderen der mehreren Benutzervorrichtungen in der virtuellen Benutzerschnittstelle unterscheidet.

11. Verfahren nach Anspruch 9, wobei Präsentationsfähigkeiten wenigstens einer der mehreren Benutzervorrichtungen in der virtuellen Benutzerschnittstelle identisch sind mit Präsentationsfähigkeiten einer anderen der mehreren Benutzervorrichtungen in der virtuellen Benutzerschnittstelle.

12. Verfahren nach Anspruch 9, wobei die Fähigkeiten der virtuellen Verbundvorrichtung Fähigkeiten von durch die erste Benutzervorrichtung und die zweite Benutzervorrichtung eingesetzten Netzwerken enthalten.

13. Verfahren nach Anspruch 9, wobei die erste Benutzervorrichtung eine Rechnervorrichtung umfasst.

14. Verfahren nach Anspruch 9, wobei die erste Benutzervorrichtung eine Kommunikationsvorrichtung umfasst.

15. Verfahren nach Anspruch 9, wobei die erste Benutzervorrichtung eine Rechnervorrichtung umfasst und die zweite Benutzervorrichtung eine Kommunikationsvorrichtung umfasst.

16. Verfahren nach Anspruch 9, wobei die erste Benutzervorrichtung eine Anzeigevorrichtung umfasst.

## Revendications

1. Support lisible par ordinateur contenant enregistré sur ce dernier des instructions constituées d'un cadre d'interface permettant d'utiliser une interface d'utilisateur virtuel pour un dispositif composite virtuel pour présenter une communication, le dispositif composite virtuel représentant des capacités disponibles à travers de multiples dispositifs utilisateur associés au dispositif composite virtuel, chacun des multiples dispositifs utilisateur étant associé à des capacités de présentation et à un réseau grâce auquel le dispositif utilisateur communique, l'interface d'utilisateur virtuel associée à un utilisateur comprenant des préférences servant à utiliser l'un des multiples dispositifs utilisateur pour présenter le type de communication qui a été reçu, et les instructions, quand elles sont exécutées, amènent le processeur:
à recevoir une communication associée à un utilisateur par le cadre d'interface d'utilisateur virtuel,
en fonction d'un type de message de la communication qui est reçue et des préférences comprises dans l'interface d'utilisateur virtuel destinées à l'utilisateur, à déterminer un des multiples dispositifs utilisateur qui est à même de recevoir la communication sur laquelle présenter la communication, et
à transmettre la communication depuis le cadre d'interface d'utilisateur virtuel au dispositif déterminé des multiples dispositifs utilisateur sur le réseau associé à l'un des multiples dispositifs utilisateur.

2. Support selon la revendication 1, dans lequel au moins une capacité de présentation d'au moins un des multiples dispositifs utilisateur de l'interface d'utilisateur virtuel diffère de ladite capacité de présentation d'un autre dispositif des multiples dispositifs utilisateur présents dans l'interface d'utilisateur virtuel.

3. Procédé selon la revendication 1, dans lequel les capacités de présentation d'au moins un des multiples dispositifs utilisateur présents dans l'interface d'utilisateur virtuel sont les mêmes que les capacités de présentation d'un autre dispositif des multiples dispositifs utilisateur présents dans l'interface d'utilisateur virtuel.

4. Support selon la revendication 1, dans lequel les capacités du dispositif composite virtuel comprennent des capacités de réseaux utilisés par le premier dispositif utilisateur et par le deuxième dispositif utilisateur.

5. Support selon la revendication 1, dans lequel le premier dispositif utilisateur comprend un dispositif informatique.

6. Support selon la revendication 1, dans lequel le premier dispositif utilisateur comprend un dispositif de télécommunication.

7. Support selon la revendication 1, dans lequel le premier dispositif utilisateur comprend un dispositif informatique et où le deuxième dispositif utilisateur comprend un dispositif de télécommunication.

8. Support selon la revendication 1, dans lequel le premier dispositif utilisateur comprend un dispositif d'affichage.

9. Procédé implémenté sur ordinateur d'un cadre d'interface d'utilisateur virtuel servant à utiliser une interface d'utilisateur virtuel pour un dispositif composite virtuel pour présenter une communication où le dispositif composite virtuel représente des capacités disponibles à travers de multiples dispositifs utilisateur associés au dispositif composite virtuel où chacun des multiples dispositifs utilisateur est associé à des capacités de présentation et avec un réseau par lequel le dispositif utilisateur communique, l'interface d'utilisateur virtuel associée à l'utilisateur comprenant des préférences pour utiliser un des multiples dispositifs utilisateur pour présenter le type de communication qui a été reçu, le procédé comprenant :
la réception d'une communication destinée à un utilisateur par le cadre d'interface d'utilisateur virtuel,
en fonction d'un type de message de la communication qui est reçue et des préférences comprises dans l'interface d'utilisateur virtuel associée à l'utilisateur,
la détermination d'un des multiples dispositifs utilisateur qui est à même de recevoir la communication sur laquelle présenter la communication, et
la transmission de la communication depuis le cadre d'interface d'utilisateur virtuel au dispositif déterminé des multiples dispositifs utilisateur sur le réseau associé à l'un des multiples dispositifs utilisateur.

10. Procédé selon la revendication 9, dans lequel au moins une capacité de présentation d'au moins un des multiples dispositifs utilisateur dans l'interface d'utilisateur virtuel diffère de ladite capacité de présentation d'un autre dispositif des multiples dispositifs utilisateur présents dans l'interface d'utilisateur virtuel.

11. Procédé selon la revendication 9, dans lequel les capacités de présentation d'au moins un des multiples dispositifs utilisateur dans l'interface d'utilisateur virtuel sont les mêmes que les capacités de présentation d'un autre dispositif des multiples dispositifs utilisateur présents dans l'interface d'utilisateur virtuel.

12. Procédé selon la revendication 9, dans lequel les capacités du dispositif composite virtuel comprennent des capacités de réseaux utilisées par le premier dispositif utilisateur et par le deuxième dispositif utilisateur.

13. Procédé selon la revendication 9, dans lequel le premier dispositif utilisateur comprend un dispositif informatique.

14. Procédé selon la revendication 9, dans lequel le premier dispositif utilisateur comprend un dispositif de télécommunication.

15. Procédé selon la revendication 9, dans lequel le premier dispositif utilisateur comprend un dispositif informatique et où le deuxième dispositif utilisateur comprend un dispositif de télécommunication.

16. Procédé selon la revendication 9, dans lequel le premier dispositif utilisateur comprend un dispositif d'affichage.
